# EUROPEAN PATENT APPLICATION

(11) **EP 0 978 789 A2**
(43) Date of publication of application: **09.02.2000**
(21) Application number: 99305949.2
(22) Date of filing: 27.07.1999
(51) Int. Cl.: G06F 13/42, G06F 13/40

(54) **Apparatus, method and system for upgrading a device with an incompatible processor**

(30) Priority: 05.08.1998 US 129523
(71) Applicant: Newer Technology, Inc., Wichita, KS 67209 (US)
(72) Inventor: Hinshaw, Darryl R.,, Wichita, KS 67217 (US); Runyan, Larry J.,, Wichita, KS 67206 (US); Mickaelian, Ben B., Wichita, KS 67207 (US)
(74) Representative: Nicholls, Michael John

(57) **Abstract**

The present invention provides a method, apparatus and system for transferring a first data to a processor instead ofa second data. The present invention determines one or more current conditions by monitoring one or more buses and whenever the one or more current conditions match a trigger condition, the present invention prevents the transfer of the second data to the processor and transfers the first data to the processor.

## Description

### FIELD OF THE INVENTION

The present invention relates generally to computers and other devices that contain processors, and more particularly to an apparatus, method and system for upgrading a device with an incompatible processor.

### BACKGROUND OF THE INVENTION

Without limiting the scope of the present invention, this background of the present invention is described in connection with upgrading a device, such as a personal computer, workstation or server computer, with an incompatible processor. The present invention, however, is not limited to computers and is applicable to any situation where it is desirable to integrate a processor into a device or system that would be otherwise incompatible with that processor.

Most computers and devices having processors use instructions and data embedded in read only memory ("ROM") to configure the computer or device at power up, and provide the basic services that allow the processor to communicate with internal and external devices. These instructions and data are typically referred to as firmware or the Basic Input/Output System ("BIOS"). Moreover, each type of processor and/or family of processors has its own unique instruction set and register configuration. Thus to ensure proper operation of the computer or device, the firmware in the ROM must be machine code compatible with the instruction set and register configuration of the processor.

Over the past ten years, the speed of computer processors has increased dramatically. Over this same period, however, the speed at which the processor communicates with other components and devices within a system has increased at a much slower rate. For example, the processors of some of the earliest personal computers operated at the same speed as the communication busses connecting the processor to the other components and devices. In contrast, it is not uncommon to find processors in today's personal computers operating at six to eight times the speed ofthe computer's communication buses. And processors operating at ten, twelve and fourteen times the speed of the computer's communication buses can be envisioned in the foreseeable future.

Since the firmware or BIOS of older computers or devices. often referred to as legacy systems, are compatible with only a specific processor and/or family of processors, these legacy systems may not be compatible with the newer and faster processors. Moreover, the firmware or BIOS cannot be efficiently upgraded to operate with the new processors because the ROM chips containing the firmware or BIOS are soldered onto the system or motherboard. As a result, computers or other devices having processors are becoming obsolete based solely on the incompatibilities of the newer and faster processors even though the other components, such as the communication buses, system boards, drives and memory may not be obsolete.

### SUMMARY OF THE INVENTION

The present invention provides various methods, apparatus and systems for transferring a first data to a processor instead ofa second data

The present invention determines one or more current conditions by monitoring one or more buses and whenever the one or more current conditions match a trigger condition, the present invention prevents the transfer of the second data to the processor and transfers the first data to the processor.

In another embodiment, the present invention monitors one or more buses to determine a current data on the one or more buses and one or more elements of historical information accumulated while monitoring the one or more buses, and then stores the one or more elements of historical information. Whenever the current data and the one or more elements of historical information match a trigger condition, the present invention prevents the transfer of the second data to the processor, determines the first data based on the trigger condition, and transfers the first data to the processor.

In another embodiment, the present invention determines one or more current conditions by monitoring an address bus, and whenever the one or more current conditions match a trigger condition: uncouples the processor from a data bus such that the transfer of the second data to the processor is prevented; couples the processor to a substitute memory containing the first data; and transfers the first data to the processor.

In still another embodiment, the present invention determines one or more current conditions by monitoring an address bus, and whenever the one or more current conditions match a trigger condition: intercepts a second address sent by the processor; and transfers a first address such that the first data is sent to the processor. The first address corresponds to the location of the first data and the second address corresponds to the location ofthe second data

The present invention also provides and apparatus for transferring a first data to a processor instead of a second data. The apparatus has a control circuit coupled to the processor and one or more buses. The control circuit monitors the one or more buses to determine when one or more current conditions match a trigger condition. Whenever the trigger condition is met, the control circuit preventing the transfer of the second data to the processor and transferring the first data to the processor.

In another embodiment, the present invention has a bus multiplexer coupled to the processor, a memory circuit coupled to the bus multiplexer, a first bus coupled to the bus multiplexer, a second bus coupled to the processor, and a control circuit coupled to the bus multiplexer, the memory circuit and the second bus. The memory circuit contains a first data and the first bus receives a second data. The control circuit monitors the second bus to determine when one or more current conditions match a trigger condition. Whenever the trigger condition is met, the control circuit controls the bus multiplexer and memory circuit such that the transfer of the second data to the processor is prevented and the first data is transferred to the processor.

In still another embodiment, the present invention has an address translator coupled to the processor, an address bus coupling the processor to the address translator, and a control circuit coupled to the address translator and the address bus. The control circuit monitors the address bus to determine when one or more current conditions match a trigger condition. Whenever the trigger condition is met, the control circuit controls the address translator such that the transfer of the second data to the processor is prevented and the first data is transferred to the processor.

The present invention also provides a system for upgrading a host system having one or more busses and a memory containing a second data coupled to the one or more buses. The system has a processor, a control circuit, and a coupling device for coupling the processor and the control circuit to the one or more buses. The control circuit monitors the one or more buses to determine when one or more current conditions match a trigger condition. Whenever the trigger condition is met, the control circuit prevents the transfer of the second data to the processor and transfers a first data to the processor.

In another embodiment, the present invention provides a system for upgrading a host system having a system address bus, a system data bus and a second memory containing a second data coupled to the system address bus and the system data bus, the system comprising. The system has a processor, a control circuit, a bus multiplexer, a first memory having a first data, an upgrade data bus coupling the bus multiplexer to the processor, a substitute data bus coupling the first memory to the bus multiplexer, and a coupling device for coupling the processor and the control circuit to the system address bus, and the bus multiplexer to the system data bus. The control circuit is coupled to the bus multiplexer and the first memory. Moreover, the control circuit monitors the system address bus to determine when one or more current conditions match a trigger condition. Whenever the trigger condition is met, the control circuit controls the bus multiplexer such that the transfer of the second data to the processor is prevented and the first data is transferred to the processor over the substitute data bus and the upgrade data bus.

In still another embodiment, the present invention provides a system for upgrading a host system having a system address bus, a system data bus and a second memory, containing a first data and a second data coupled to the system address bus and the system data bus. The system has a processor, a control circuit, an address translator, an upgrade address bus coupling the processor to the address translator, and a coupling device for coupling the processor to the system data bus and the address translator to the system address bus. The control circuit is coupled to the address translator and the upgrade address bus. Moreover, the control circuit monitors the upgrade address bus to determine when one or more current conditions match a trigger condition. Whenever the trigger condition is met, the control circuit controls the address translator such that the transfer of the second data to the processor is prevented and the first data is transferred to the processor over the system data bus.

### BRIEF DESCRIPTION OF THE DRAWINGS

The invention will be further described by way of example with reference to the accompanying drawings, in which:
Figure 1 is a block diagram ofa computer system;
Figure 2 is a block diagram of a computer system utilizing an embodiment of the present invention;
Figure 3 is a block diagram of the present invention in accordance with a first embodiment using a ROM based implementation;
Figure 4 is a block diagram of the present invention in accordance with a second embodiment using a register based implementation; and
Figure 5 is a block diagram of the present invention in accordance with a third embodiment using an address translator based implementation.

### DETAILED DESCRIPTION OF THE INVENTION

Although preferred embodiments of the invention will be described in detail, it will be understood by those skilled in the art that various modifications can be made therein without departing from the spirit and scope of the invention as set forth in the appended claims.

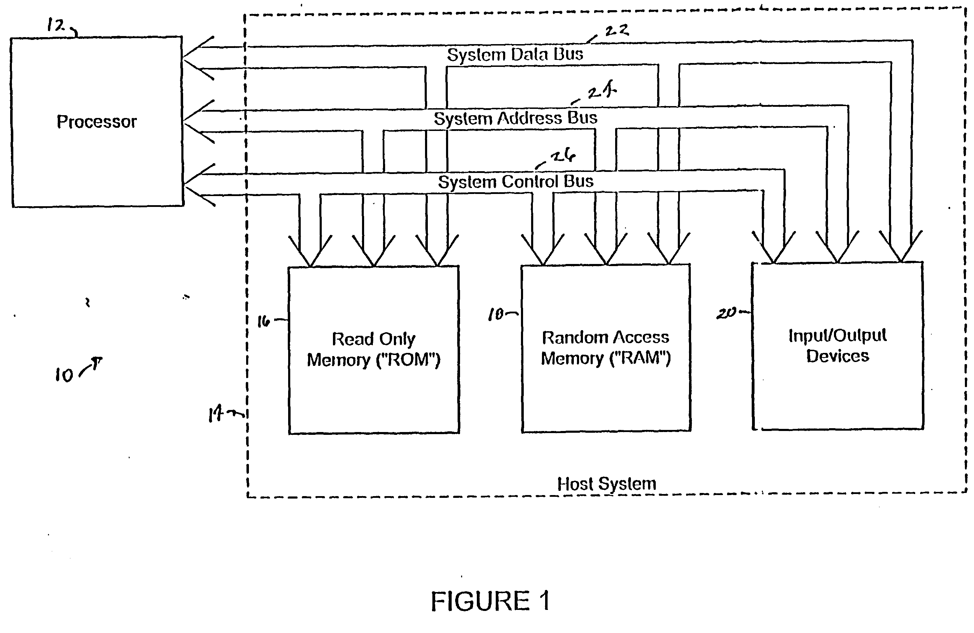

Now referring to Figure 1, a block diagram of a typical computer system is illustrated and generally denoted as 10. The typical computer system 10 has a processor 12 connected to a host system 14. The host system 14 contains a number of subcomponents, such as read only memory ("ROM") 16, random access memory ("RAM") 18 and various input/output devices 20. Each of these components, the ROM 16, the RAM 18, and the various input/output devices 20 are all connected to the processor 12 by a system data bus 22, a system address bus 24 and a system control bus 26.

During power up the processor 12 accesses machine code instructions and data stored in the ROM 16 to configure the host system 14 and provide the basic services that allows the processor 12 to communicate with the RAM 18 and various input/output devices 20. The processor 12 accesses the instructions and data stored in the ROM 16 by sending an address over the system address bus 24. The control logic block (not shown) in the host system 14 decodes the address and determines where in the memory map of the host system 14, the access is being made. The memory map includes the ROM 16, RAM 18 and other types of memory (not shown) in the host system 14. Since the address is in the ROM 16 address range, the control logic block (not shown) activates the output enable line of the ROM 16 using the system control bus 26. This enables the ROM 16 to load the contents of the memory at the specified address onto the system data bus 22, where the data is transferred to the processor 12. The processor 12 then executes the instructions and uses the data. As used herein, the term data refers to data, instructions, addresses, control signals or any other type of information that is received or transmitted by the processor 12.

Any incompatibilities between the processor 12 and the ROM 16 can prevent the host system 14 from booting up or cause the host system 14 to lock up, function unreliably, crash or become unstable. As a result, the host system 14 can only be upgraded with compatible processors. Upgrading the host system 14 with a different processors may be desirable for many reasons because the different processor may have improved features and capabilities, may be less expensive, or may be more easily obtainable. There is, therefore, a need for an apparatus, method and system for upgrading the host system 14 with an incompatible processor.

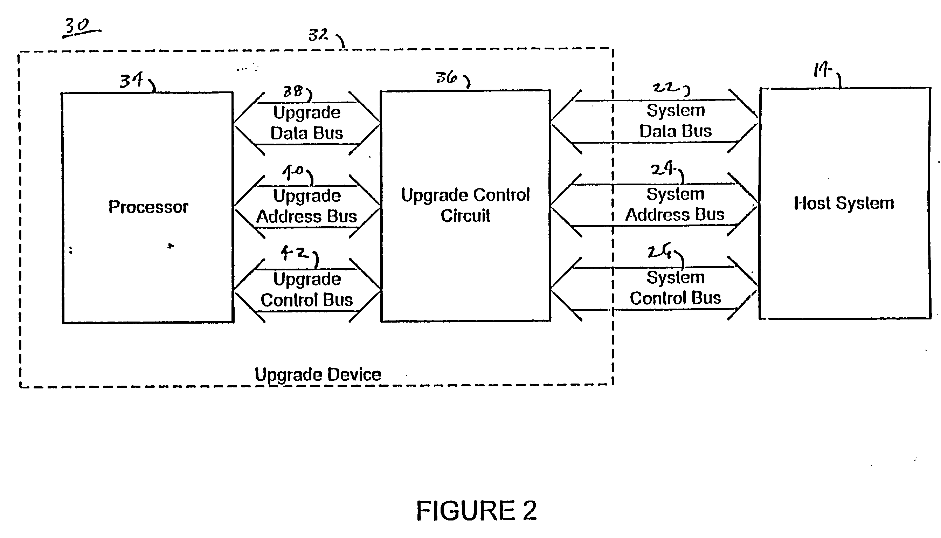

Now referring to Figure 2, a block diagram of a computer system utilizing an embodiment of the present invention is illustrated and generally denoted as 30. The upgrade device 32 contains a upgrade processor 34 connected to an upgrade control circuit 36 by an upgrade data bus 38, an upgrade address bus 40 and an upgrade control bus 42. The upgrade device 32 is then connected to the host system 14 by system data bus 22, system address bus 24 and system control bus 26. More specifically, these buses 22, 24 and 26 are connected to the upgrade control circuit 36 on the upgrade device 32.

Typically, the upgrade device 32 is configured to fit in the same coupling device, which is usually a slot or socket (not shown), that was occupied by the old or legacy processor 12 (Figure 1). Physically replacing the legacy processor 12 (Figure 1) is not necessarily required if the upgrade device 32 can "take over" the host system 14 during power up and put the legacy processor 12 (Figure 1) to sleep. Accordingly, other alternative configurations of the present invention are available depending on the architecture ofthe host system 14.

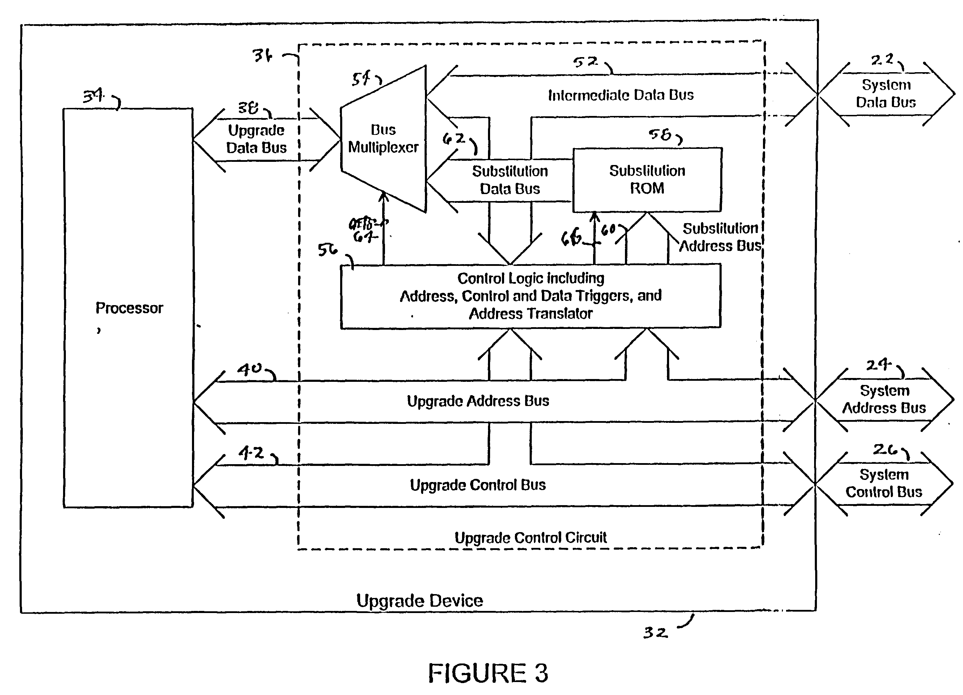

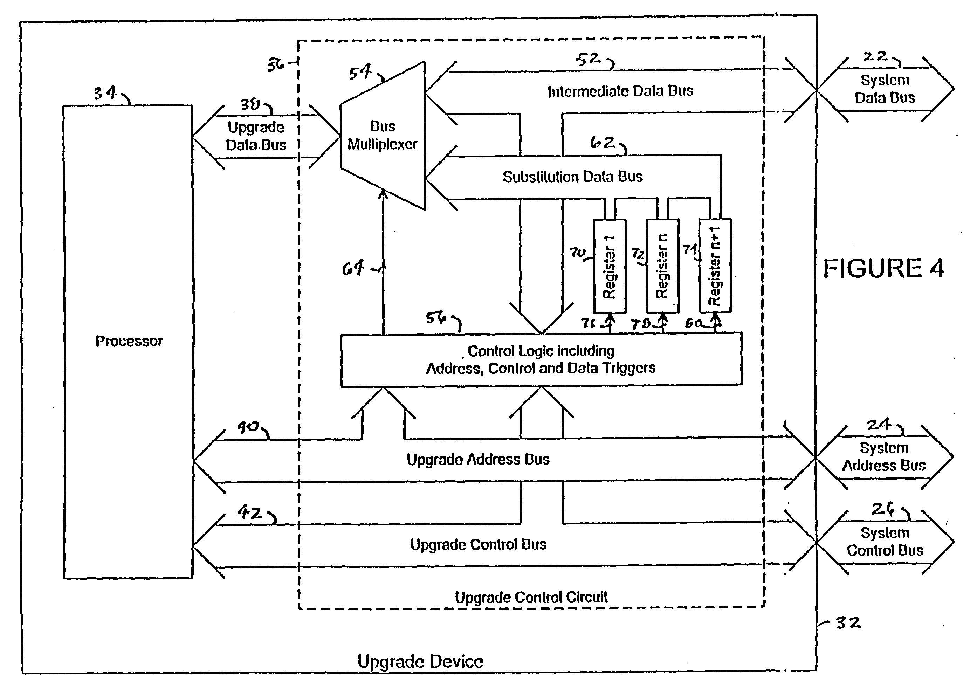

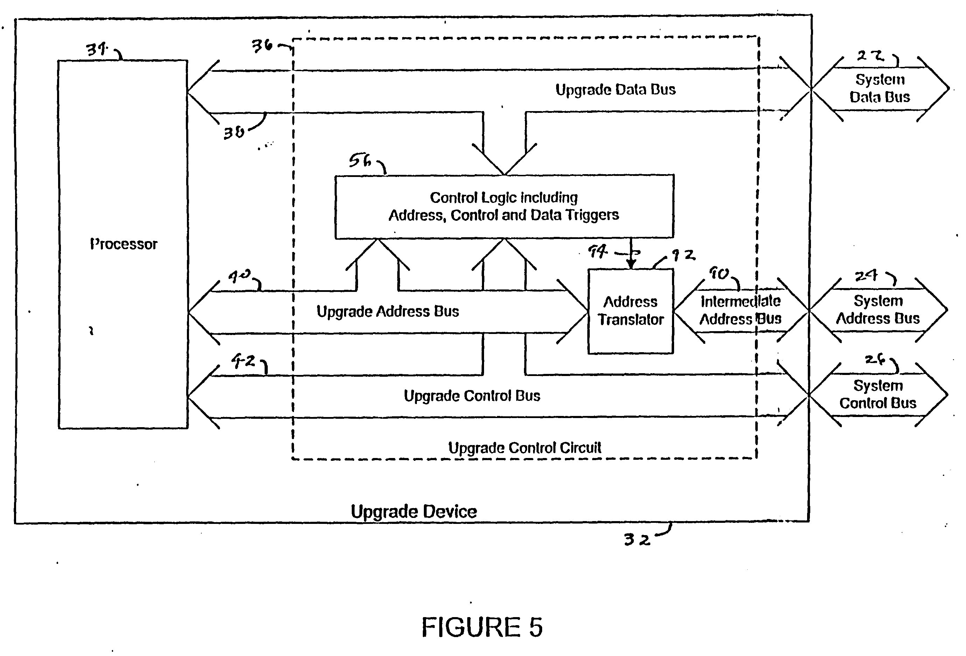

Legacy data in the host system 14 is analyzed before the upgrade device 32 is installed. This analysis identifies the addresses in the ROM 16 (Figure 1) of the host system 14 that contain data or instructions that are incompatible with the upgrade processor 34. These addresses are then stored in the upgrade control circuit 36 and substitution data is created to replace the legacy data. The present invention, therefore, provides a upgrade device 32 that bypasses sections of the incompatible legacy data and replaces those sections with substitution data that is compatible with the upgrade processor 34. When the upgrade control circuit 36 determines that the substitution data is required, the upgrade control circuit 36 prevents the transfer of the legacy data to the upgrade processor 34 and transfers the substitute data to the upgrade processor 34. Depending on the particular embodiment ofthe present invention, the substitution data is stored in either a substitution ROM (see Figure 3 and corresponding discussion), registers (see Figure 4 and corresponding discussion), or in the existing memory map ofthe host system (see Figure 5 and corresponding discussion). Other embodiments are possible and within the scope of the present invention.

Now referring to Figure 3, a block diagram of the present invention in accordance with a first embodiment using a ROM based implementation is illustrated and will now be described. The ROM based implementation of the present invention is typically used in situations where the quantity of substitution data is larger than just a few bytes. As previously described in reference to Figure 2, the upgrade device 32 connects to the system data bus 22, system address bus 24 and system control bus 26 of the host system 14 (Figures 1 and 2). In addition, the upgrade device 32 has a upgrade processor 34 and a upgrade control circuit 36 connected together by the upgrade data bus 38, upgrade address bus 40 and upgrade control circuit 42.

The upgrade control circuit 36 contains an intermediate data bus 52 that connects to the system data bus 22, bus multiplexer 54 and control logic 56. The system address bus 24 connects to the upgrade address bus 40. Similarly, the system control bus 26 connects to the upgrade control bus 42. In addition, both the upgrade address bus 40 and the upgrade control bus 42 are also connected to the control logic 56. The control logic 56 is connected to a substitution ROM 58 by a substitution address bus 60. The substitution ROM 58 is connected to the bus multiplexer 54 by a substitution data bus 62. Both the bus multiplexer 54 and the substitution ROM 58 are controlled by the control logic 56 using control lines 64 and 66, respectively.

The control logic 56 determines when the substitution data is required by monitoring one or more of the system buses 22, 24 and/or 26 and determining whether one or more current conditions match a trigger condition. The one or more current conditions may include any data on the buses being monitored and/or historical information stored by the control logic 56. The historical information may include such conditions as a combination or series of addresses or instructions, the number of times that an address has been accessed or an instruction has been executed, or any other recordable pattern of data on the buses being monitored that can be used to identify a trigger condition. Note that there are conditions, such as ROM checksum verification, where the substitution data cannot be inserted without crashing the system.

Although only one bus may need to be monitored, the complexity of trigger conditions can be reduced by monitoring additional buses. Accordingly, Figure 3 illustrates the monitoring of all three buses. The control logic 56 monitors the system data bus 22 by monitoring the intermediate data bus 52, the system address bus 24 by monitoring the upgrade address bus 40, and the system control bus 26 by monitoring the upgrade control bus 42. When a trigger conditions occurs, the control logic 56 controls the bus multiplexer 54 and substitution ROM 58 so that the transfer of the legacy data to the upgrade processor 34 is prevented and the substitute data is transferred to the upgrade processor 34. The control logic 56 loads the contents ofthe appropriate address in the substitution ROM 58 onto the substitution data bus 62 and transfers it, via the bus multiplexer 54, to the upgrade data bus 38.

For example, if the occurrence of a particular address is one of the trigger conditions, the control logic 56 monitors the system address bus 24 via the upgrade address bus 40. Each time the upgrade processor 34 sends an address across the upgrade address bus 40 that falls within the address range where the legacy data resides, that address is compared to the list of addresses stored in the control logic 56. This list of addresses identifies the location of legacy data that is incompatible with the upgrade processor 34. When an address is called that is on the list of addresses of incompatible legacy data, the control logic 56 determines whether the trigger condition is met (the data needs to be modified every time it is accessed or only when other criteria are met). If the trigger condition is not met, the data passes directly through the bus multiplexer 54 to the upgrade processor 34.

If the trigger condition is met, which may be every time that the address is accessed, the control logic 56 addresses the appropriate substitute data in the substitution ROM 58 by translating the current address and sending the substitute data address to the substitute ROM 58 using the substitution address bus 60. The control logic 56 then causes the bus multiplexer 54 to switch the upgrade data bus 38 from the intermediate data bus 52 to the substitution data bus 62, at which point the control logic 56 activates the substitution ROM 58, thereby causing the upgrade processor 34 to access the substitution data. Operation continues thus until the control logic 56 identifies the address call of the last byte of the substitution data. Once the last of the substitution data has been loaded into the upgrade processor 34, the control logic 56 causes the bus multiplexer 54 to switch the upgrade data bus 38 back to the intermediate data bus 52. Multiple switching extents are possible, depending on the need, and switching back to the intermediate data bus 52 is not necessarily a requirement.

Now referring to Figure 4, a block diagram of the present invention in accordance with a second embodiment using a register based implementation is illustrated and will now be described. The register based implementation is best used in situations where changing only a few bytes of legacy data is required. As previously described in reference to Figure 3, the upgrade device 32 connects to the system data bus 22, system address bus 24 and system control bus 26 of the host system 14 (Figures 1 and 2). In addition, the upgrade device 32 has a upgrade processor 34 and a upgrade control circuit 36 connected together with the upgrade data bus 38, upgrade address bus 40 and upgrade control circuit 42.

The upgrade control circuit 36 contains an intermediate data bus 52 that connects to the system data bus 22, bus multiplexer 54 and control logic 56. The system address bus 24 connects to the upgrade address bus 40. Similarly, the system control bus 26 connects to the upgrade control bus 42. In addition, both the upgrade address bus 40 and the upgrade control bus 42 are also connected to the control logic 56. The control logic 56 is connected to at least one register 70 by control line 76. The register 70 is connected to the bus multiplexer 54 by the substitution data bus 62. The bus multiplexer 54 is controlled by the control logic 56 using control line 64. As Figure 4 illustrates, there can be as many registers as are needed. In each case, all the registers, register 1 70, register n 72 and register n+1 74 are connected to the substitution data bus 62 and are controlled by control lines 76, 78 and 80, respectively.

The control logic 56 determines when the substitution data is required by monitoring one or more of the system buses 22, 24 and/or 26 and determining whether one or more current conditions match a trigger condition. The one or more current conditions may include any data on the buses being monitored and/or historical information stored by the control logic 56. The historical information may include such conditions as a combination or series of addresses or instructions, the number of times that an address has been accessed or an instruction has been executed, or any other recordable pattern of data on the buses being monitored that can be used to identify a trigger condition. Note that there are conditions, such as ROM checksum verification, where the substitution data cannot be inserted without crashing the system.

Although only one bus may need to be monitored, the complexity of trigger conditions can be reduced by monitoring additional buses. Accordingly, Figure 4 illustrates the monitoring of all three buses. The control logic 56 monitors the system data bus 22 by monitoring the intermediate data bus 52, the system address bus 24 by monitoring the upgrade address bus 40, and the system control bus 26 by monitoring the upgrade control bus 42. When a trigger conditions occurs, the control logic 56 controls the bus multiplexer 54 and registers 70, 72 and 74 so that the transfer of the legacy data to the upgrade processor 34 is prevented and the substitute data is transferred to the upgrade processor 34. The control logic 56 loads the contents of the appropriate registers 70, 72 and 74 onto the substitution data bus 62 and transfers it, via the bus multiplexer 54, to the upgrade data bus 38.

For example, if the occurrence of a particular address is one of the trigger conditions, the control logic 56 monitors the system address bus 24 via the upgrade address bus 40. Each time the upgrade processor 34 sends an address across the upgrade address bus 40 that falls within the address range where the legacy data resides, that address is compared to the list of addresses stored in the control logic 56. This list of addresses identifies the location of legacy data that is incompatible with the upgrade processor 34. When an address is called that is on the list of addresses of incompatible legacy data, the control logic 56 determines whether the trigger condition is met (the data needs to be modified every time it is accessed or only when other criteria are met). If the trigger condition is not met, the data passes directly through the bus multiplexer 54 to the upgrade processor 34.

If the trigger condition is met, which may be every time that the address is accessed, the control logic 56 causes the bus multiplexer 54 to snitch the upgrade data bus 38 from the intermediate data bus 52 to the substitution data bus 62, at which point the control logic 56 activates the appropriate register 70, 72 or 74, thereby causing the upgrade processor 34 to access the substitution data. Operation continues thus until the control logic 56 identifies the address call of the last byte of the substitution data. Once the last of the substitution data has been loaded into the upgrade processor 34, the control logic 56 causes the bus multiplexer 54 to switch the upgrade data bus 38 back to the intermediate data bus 52. Multiple switching events are possible, depending on the need, and switching back to the intermediate data bus 52 is not necessarily a requirement.

Now referring to Figure 5, a block diagram of the present invention in accordance with a third embodiment using an address translator based implementation is illustrated and will now be described. As previously described in reference to Figure 3 and 4, the upgrade device 32 connects to the system data bus 22, system address bus 24 and system control bus 26 of the host system 14 (Figures 1 and 2). In addition, the upgrade device 32 has a upgrade processor 34 and a upgrade control circuit 36 connected together with the upgrade data bus 38, upgrade address bus 40 and upgrade control circuit 42.

The upgrade control circuit 36 contains an intermediate address bus 90 that connects to the system address bus 24 to an address translator 92. The system data bus 22 connects to the upgrade data bus 38. Similarly, the system control bus 26 connects to the upgrade control bus 42. In addition, the upgrade data bus 38, the upgrade address bus 40 and the upgrade control bus 42 are also connected to the control logic 56. The control logic 56 is connected to the address translator 92 by control line 94.

The control logic 56 determines when the substitution data is required by monitoring one or more of the system buses 22, 24 and/or 26 and determining whether one or more current conditions match a trigger condition. The one or more current conditions may include any data on the buses being monitored and/or historical information stored by the control logic 56. The historical information may include such conditions as a combination or series of addresses or instructions, the number of times that an address has been accessed or an instruction has been executed, or any other recordable pattern of data on the buses being monitored that can be used to identify a trigger condition. Note that there are conditions, such as ROM checksum verification, where the substitution data cannot be inserted without crashing the system.

Although only one bus may need to be monitored, the complexity of trigger conditions can be reduced by monitoring additional buses. Accordingly, Figure 5 illustrates the monitoring of all three buses. The control logic 56 monitors the system data bus 22 by monitoring the upgrade data bus 38, the system address bus 24 by monitoring the upgrade address bus 40, and the system control bus 26 by monitoring the upgrade control bus 42. When a trigger conditions occurs, the control logic 56 controls the address translator 92 so that the transfer ofthe legacy address to the system address bus 24 of the host system 14 (Figure 2) is prevented and the substitute address is transferred to the intermediate address bus 90 and the system address bus 24 of the host system 14 (Figure 2). This causes the substitution data to be transferred to the processor 34 via the system data bus 22 and upgrade data bus 38.

For example, if the occurrence of a particular address is one of the trigger conditions, the control logic 56 monitors the system address bus 24 via the upgrade address bus 40. Each time the upgrade processor 34 sends an address across the upgrade address bus 40 that falls within the address range where the legacy data resides, that address is compared to the list of addresses stored in the control logic 56. This list of addresses identifies the location of legacy data that is incompatible with the upgrade processor 34. When an address is called that is on the list of addresses of incompatible legacy data, the control logic 56 determines whether the trigger condition is met (the data needs to be modified every time it is accessed or only when other criteria are met). If the trigger condition is not met, the address passes directly through the address translator 92 and the intermediate address bus 90 to the system address bus 24.

If the trigger condition is met, which may be every time that the address is accessed, the control logic 56 causes the address translator 92 to call an address in the existing memory map ofthe host system 14 (Figure 2) where the substitute data is located. In some systems, the address translator 92 may map the substitution data to overlay the address space of the legacy data directly. In other cases, the substitution data may be mapped into a different address space. No data bus multiplexing is required in this implementation because the substitution code travels over the system data bus 22.

## Claims

1. A method for transferring a first data to a processor instead of a second data, comprising the steps of:
determining one or more current conditions by monitoring one or more buses; and
whenever the one or more current conditions match a trigger condition:
preventing the transfer of the second data to the processor, and
transferring the first data to the processor.

2. The method for transferring a first data to a processor instead of a second data, as recited in claim 1 further comprising the step of determining the first data based on the trigger condition whenever the one or more current conditions match the trigger condition.

3. The method for transferring a first data to a processor instead of a second data, as recited in claim 1 or 2 wherein the one or more current conditions comprises:
one or more elements of historical information accumulated while monitoring the one or more buses; and
a current data on the one or more buses.

4. The method for transferring a first data to a processor instead of a second data, as recited in claim 3 further comprising the step of storing the one or more elements of historical information.

5. The method for transferring a first data to a processor instead of a second data, as recited in claim 1, 2, 3 or 4 wherein the trigger condition occurs whenever the second data is incompatible with the processor.

6. The method for transferring a first data to a processor instead of a second data, as recited in any one of the preceding claims wherein:
the first data is substitute data; and
the second data is legacy data.

7. The method for transferring a first data to a processor instead of a second data, as recited in any one of the preceding claims wherein the one or more buses comprise one or more of an address bus, a control bus, and a data bus.

8. The method for transferring a first data to a processor instead of a second data, as recited in any one of the preceding claims wherein the step of preventing the transfer of the second data to the processor comprises the step of uncoupling the processor from a data bus such that the transfer of the second data to the processor is prevented.

9. The method for transferring a first data to a processor instead of a second data, as recited in any one of the preceding claims wherein the step of transferring the first data to the processor comprises the steps of:
coupling the processor to a substitute memory containing the first data; and
transferring the first data to the processor.

10. The method for transferring a first data to a processor instead of a second data, as recited in claim 9 wherein the substitute memory comprises a read only memory.

11. The method for transferring a first data to a processor instead of a second data, as recited in claim 9 wherein the substitute memory comprises one or more registers.

12. The method for transferring a first data to a processor instead of a second data, as recited in any one of claims 1 to 7 wherein the step of preventing the transfer of the second data to the processor comprises the step of intercepting a second address sent by the processor, the second address corresponding to the location of the second data.

13. The method for transferring a first data to a processor instead of a second data, as recited in claim 1 or 12 wherein the step of transferring the first data to the processor comprises the step of transferring a first address such that the first data is sent to the processor, the first address corresponding to the location of the first data.

14. An apparatus for transferring a first data to a processor instead of a second data, comprising:
a control circuit coupled to the processor and one or more buses;
the control circuit monitoring the one or more buses to determine when one or more current conditions match a trigger condition; and
whenever the trigger condition is met, the control circuit preventing the transfer of the second data to the processor and transferring the first data to the processor.

15. The apparatus for transferring a first data to a processor instead of a second data, as recited in claim 14 wherein the one or more buses comprises one or more of a data bus, an address bus, and a control bus.

16. An apparatus for transferring a first data to a processor instead of a second data, comprising:
a bus multiplexer coupled to the processor;
a memory circuit coupled to the bus multiplexer, the memory circuit containing the first data:
a first bus coupled to the bus multiplexer, the first bus receiving the second data;
a second bus coupled to the processor;
a control circuit coupled to the bus multiplexer, the memory circuit and the second bus, the control circuit monitoring the second bus to determine when one or more current conditions match a trigger condition; and
whenever the trigger condition is met, the control circuit controlling the bus multiplexer and memory circuit such that the transfer of the second data to the processor is prevented and the first data is transferred to the processor.

17. The apparatus for transferring a first data to a processor instead of a second data, as recited in claim 16 wherein the first bus is a data bus.

18. The apparatus for transferring a first data to a processor instead of a second data, as recited in claim 16 or 17 wherein the second bus is an address bus, a control bus or a data bus.

19. The apparatus for transferring a first data to a processor instead of a second data, as recited in claim 16 wherein:
the first bus further comprises an address bus, a data bus and a control bus; and the second is the data bus.

20. The apparatus for transferring a first data to a processor instead of a second data as recited in any one of claims 16 to 19 wherein the memory circuit comprises a read only memory.

21. The apparatus for transferring a first data to a processor instead of a second data, as recited in any one of claims 16 to 19 wherein the memory circuit comprises one or more registers.

22. An apparatus for transferring a first data to a processor instead of a second data, comprising:
an address translator coupled to the processor;
an address bus coupling the processor to the address translator;
a control circuit coupled to the address translator and the address bus. the control circuit monitoring the address bus to determine when one or more current conditions match a trigger condition; and
whenever the trigger condition is met, the control circuit controlling the address translator such that the transfer of the second data to the processor is prevented and the first data is transferred to the processor.

23. The apparatus for transferring a first data to a processor instead of a second data, as recited in claim 22 wherein the one or more current conditions further comprises:
one or more elements of historical information accumulated while monitoring the address bus; and
a current data on the address bus.

24. The apparatus for transferring a first data to a processor instead of a second data, as recited in claim 22 or 23 wherein the control circuit also monitors a data bus or a control bus.

25. A system for upgrading a host system having one or more buses and a memory containing a second data coupled to the one or more buses, the system comprising:
a processor;
a control circuit;
a coupling device for coupling the processor and the control circuit to the one or more buses;
the control circuit monitoring the one or more buses to determine when one or more current conditions match a trigger condition; and
whenever the trigger condition is met, the control circuit preventing the transfer of the second data to the processor and transferring a first data to the processor.

26. The apparatus for transferring a first data to a processor instead of a second data, as recited in claim 14, 15 or a system according to claim 25 wherein the control circuit further comprises a memory circuit for storing the first data.

27. A system for upgrading a host system having a system address bus, a system data bus and a second memory containing a second data coupled to the system address bus and the system data bus, the system comprising:
a processor;
a control circuit;
a bus multiplexer;
a first memory having a first data;
an upgrade data bus coupling the bus multiplexer to the processor;
a substitute data bus coupling the first memory to the bus multiplexer;
a coupling device for coupling the processor and the control circuit to the system address bus, and the bus multiplexer to the system data bus;
the control circuit is further coupled to the bus multiplexer and the first memory, the control circuit monitoring the system address bus to determine when one or more current conditions match a trigger condition; and
whenever the trigger condition is met, the control circuit controlling the bus multiplexer such that the transfer of the second data to the processor is prevented and the first data is transferred to the processor over the substitute data bus and the upgrade data bus.

28. A system for upgrading a host system having a system address bus, a system data bus and a second memory containing a first data and a second data coupled to the system address bus and the system data bus, the system comprising:
a processor;
a control circuit;
an address translator;
an upgrade address bus coupling the processor to the address translator;
a coupling device for coupling the processor to the system data bus and the address translator to the system address bus;
the control circuit is further coupled to the address translator and the upgrade address bus, the control circuit monitoring the upgrade address bus to determine when one or more current conditions match a trigger condition; and
whenever the trigger condition is met, the control circuit controlling the address translator such that the transfer of the second data to the processor is prevented and the first data is transferred to the processor over the system data bus.

29. The apparatus according to any one of claims 14 to 24 or a system according to any one of claims 25 to 28 wherein the first data is based on the trigger condition.

30. The apparatus according to any one of claims 14 to 24 wherein the one or more current conditions comprises:
one or more elements of historical information accumulated while monitoring the one or more buses; and
a current data on the one or more buses.

31. The apparatus according to any one of claims 14 to 24 or a system according to any one of claims 25 to 28 wherein the trigger condition occurs whenever the second data is compatible with the processor.

32. The apparatus according to any one of claims 14 to 24 or a system according to any one of claims 25 to 28 wherein:
the first data is substitute data; and
the second data is legacy data.
